# EUROPEAN PATENT APPLICATION

(11) **EP 4 790 813 A1**
(43) Date of publication of application: **12.08.2026**
(21) Application number: 25768567.7
(22) Date of filing: 04.03.2025
(51) Int. Cl.: H01M 50/333, H01M 50/367, H01M 50/204, H01M 10/6568, H01M 10/613, F16B 5/02

(54) **BATTERY PACK**

(30) Priority: 07.03.2024 KR 20240032539; 28.10.2024 KR 20240148400
(71) Applicant: LG Energy Solution, Ltd., Seoul 07335 (KR)
(72) Inventor: LEE, Sang Yoon, Daejeon 34122 (KR); LEE, Hyoung Suk, Daejeon 34122 (KR); SHIN, Ju Hwan, Daejeon 34122 (KR)
(74) Representative: Plasseraud IP
(86) International application number: PCT/KR2025/002868
(87) International publication number: WO 2025/188043

(57) **Abstract**

Disclosed herein relates to a battery pack including: a battery cell assembly including a battery cell; a pack frame including a bottom frame supporting the battery cell assembly and a side frame coupled to the bottom frame, the bottom frame and the side frame defining an accommodation space for accommodating the battery cell assembly, the bottom frame including a first venting passage communicating with an external space; and a first venting device disposed within the first venting passage of the bottom frame, and configured to open and close an inner passage in response to pressure in the accommodation space of the pack frame.

## Description

### [Technical Field]

The present disclosure relates to a battery pack, and more particularly to a battery pack including a venting device.

This application claims the benefit of Korean Patent Application No. 10-2024-0032539, filed on March 7, 2024, and Korean Patent Application No. 10-2024-0148400, filed on October 28, 2024, the disclosures of which are incorporated herein by reference.

### [Background]

Unlike primary batteries, secondary batteries can be charged and discharged a plurality of times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

As secondary batteries are used in mobility, there is a growing demand for their safety. In the event of an accident, such as a fire, in a secondary battery used for mobility, the driver's life can be endangered, so research on technologies to improve the safety of secondary batteries is essential.

### [Summary]

### [Technical Problem]

The technical challenge of the present disclosure is to provide a battery pack that includes a venting device.

To address the above challenges, the present disclosure provides a battery pack including: a battery cell assembly comprising a battery cell; a pack frame comprising a bottom frame supporting the battery cell assembly and a side frame coupled to the bottom frame, the bottom frame and the side frame defining an accommodation space for accommodating the battery cell assembly, the bottom frame comprising a first venting passage communicating with an exterior space; and a first venting device disposed within the first venting passage of the bottom frame, and configured to open and close an inner passage in response to pressure in the accommodation space of the pack frame.

In exemplary embodiments, the pack frame further includes a cooling passage configured for cooling fluid to flow through, wherein the first venting passage and the cooling passage extend in a first direction, wherein the first venting passage and the cooling passage are spaced apart from each other in a second direction perpendicular to the first direction.

In exemplary embodiments, the first venting device is accommodated entirely within the first venting passage of the bottom frame.

In exemplary embodiments, the bottom frame includes a first inner wall and a first outer wall defining the first venting passage, wherein the first venting device includes: a first base plate mounted on the first inner wall of the bottom frame, and having a passage communicating through a through-hole in the first inner wall of the bottom frame; a first open/close cover configured to open and close the passage of the first base plate; a first spring providing resilience to the first open/close cover to cause the first open/close cover to close the passage of the first base plate; and a first cap body fixed to the first base plate, and supporting the first spring.

In exemplary embodiments, the first open/close cover is configured to move between a closed position closing the passage of the first base plate and an open position opening the passage of the first base plate, wherein the closed position of the first open/close cover is closer to the first inner wall than the open position of the first open/close cover, the first spring is configured to press the first open/close cover in a direction from the first outer wall toward the first inner wall.

In exemplary embodiments, when the first open/close cover is in the closed position, the first spring does not penetrate the accommodation space of the pack frame.

In exemplary embodiments, one end of the first spring contacts the first cap body, and the other end of the first spring contacts the first open/close cover.

In exemplary embodiments, the first cap body includes a protruding part supporting the first spring.

In exemplary embodiments, the battery pack further includes: a first fastening bolt coupled to the first inner wall of the bottom frame, and including a protruding part protruding from the first inner wall of the bottom frame in a direction from the first inner wall of the bottom frame toward the first outer wall of the bottom frame; and a first nut threaded onto the protruding part of the first fastening bolt, wherein the first base plate includes a fastening hole into which a protruding part of the first fastening bolt is inserted, wherein the first base plate is fixed to the first inner wall of the bottom frame by the first nut fitting into the protruding part of the first fastening bolt.

In exemplary embodiments, the bottom frame further includes a cover plate coupled to the first outer wall to cover a through-hole in the first outer wall that is unidirectionally superimposed on the first venting device.

In exemplary embodiments, the battery pack further includes: a plurality of second venting devices disposed within a second venting passage provided between the second inner wall and the second outer wall of the side frame, wherein each of the plurality of second venting devices is configured to open and close an internal passage in response to pressure in the accommodation space of the pack frame.

In exemplary embodiments, the side frame includes a first segment and a second segment spaced apart in a third direction with the accommodation space in between, and a third segment and a fourth segment perpendicular to the third direction with the accommodation space in between, wherein the plurality of second venting devices is mounted on at least two among the first segment, the second segment, the third segment, and the fourth segment of the side frame.

In exemplary embodiments, each of the plurality of second venting devices is accommodated entirely within the second venting passage of the side frame.

In exemplary embodiments, each of the plurality of second venting devices includes: a second base plate mounted on the second inner wall of the side frame, and having a passage communicating through a through-hole in the second inner wall of the side frame; a second open/close cover configured to open and close the passage of the second base plate; a second spring providing resilience to the second open/close cover to cause the second open/close cover to close the passage in the second base plate; and a second cap body fixed to the second base plate, and supporting the second spring.

In exemplary embodiments, each of the plurality of second venting devices is exposed to the outside through a through-hole in the second outer wall.

### [Advantageous Effects]

According to exemplary embodiments of the present disclosure, the venting device is mounted to the pack frame such that it does not occupy the accommodation space of the pack frame accommodating the battery cells, thereby improving the space utilization and energy density of the battery pack.

According to exemplary embodiments of the present disclosure, the venting device is mounted on the pack frame so as not to occupy the accommodation space of the pack frame, so that the venting device can be mounted on different parts of the pack frame without being limited to the installation location and number of valve structures.

According to exemplary embodiments of the present disclosure, hot gases generated by the battery cell assembly can be quickly discharged to the front, rear, and sides of the battery pack through venting devices mounted on the bottom frame and side frames of the pack frame, thereby improving the safety of the battery pack.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIG. 1 is a perspective view illustrating a battery pack according to exemplary embodiments of the present disclosure.
FIG. 2 is a cross-sectional view illustrating a portion of a battery pack according to exemplary embodiments of the present disclosure.
FIG. 3 is a side view illustrating a portion of a battery pack according to exemplary embodiments of the present disclosure.
FIG. 4 is a side view illustrating a venting device according to exemplary embodiments of the present disclosure.
FIG. 5 is a cross-sectional view of a battery pack with the venting device in a closed state.
FIG. 6 is a cross-sectional view of a battery pack with the venting device in an open state.
FIGS. 7a and 7b are cross-sectional views illustrating a method of manufacturing a battery pack according to exemplary embodiments of the present disclosure.
FIG. 8 is a layout diagram schematically illustrating a battery pack according to exemplary embodiments of the present disclosure.
FIG. 9 is a layout diagram schematically illustrating a bottom frame of a battery pack according to exemplary embodiments of the present disclosure.
FIG. 10 is a cross-sectional view illustrating a venting device mounted on a bottom frame.
FIG. 11 is a layout diagram schematically illustrating a battery pack according to exemplary embodiments of the present disclosure.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

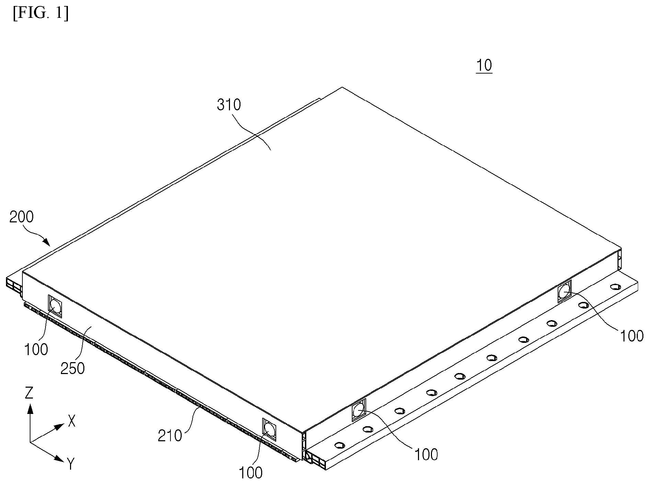

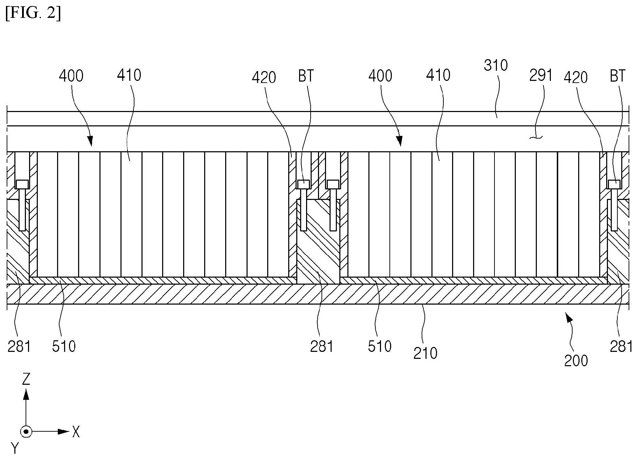

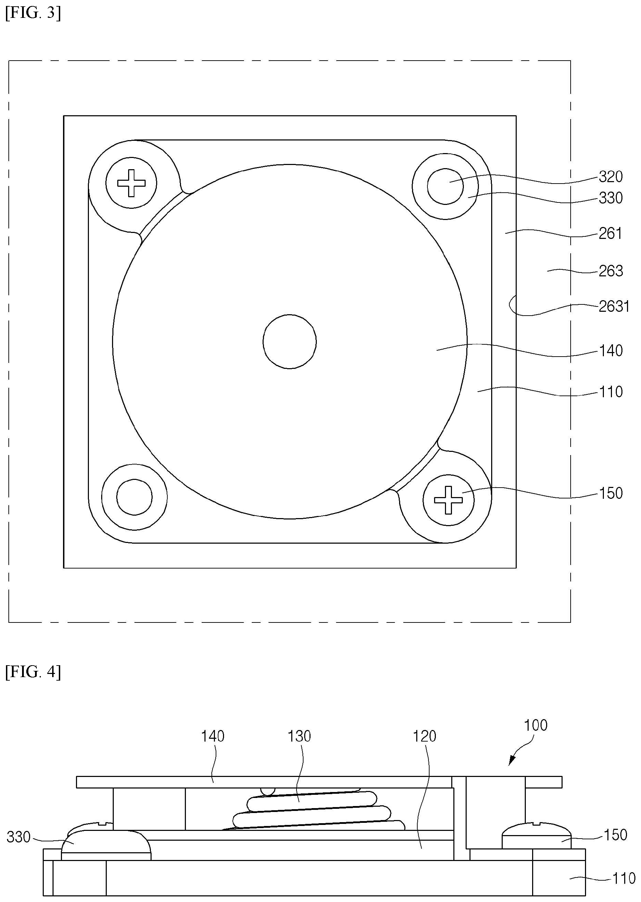

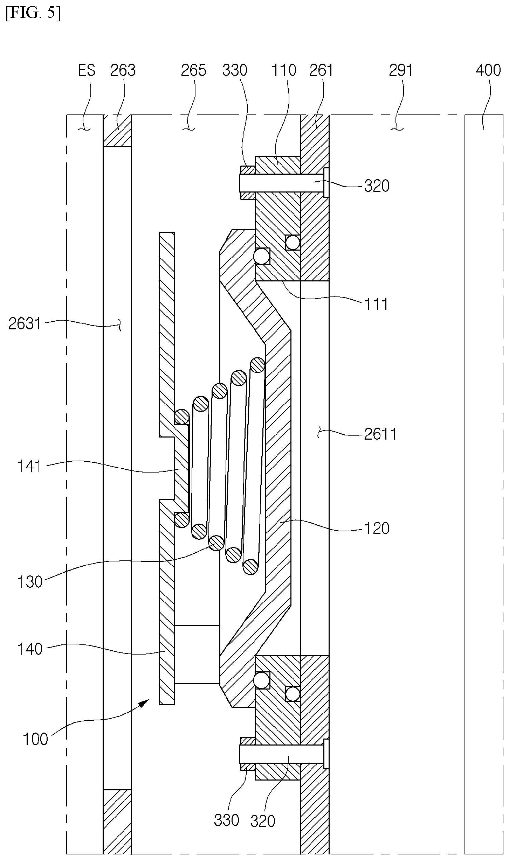

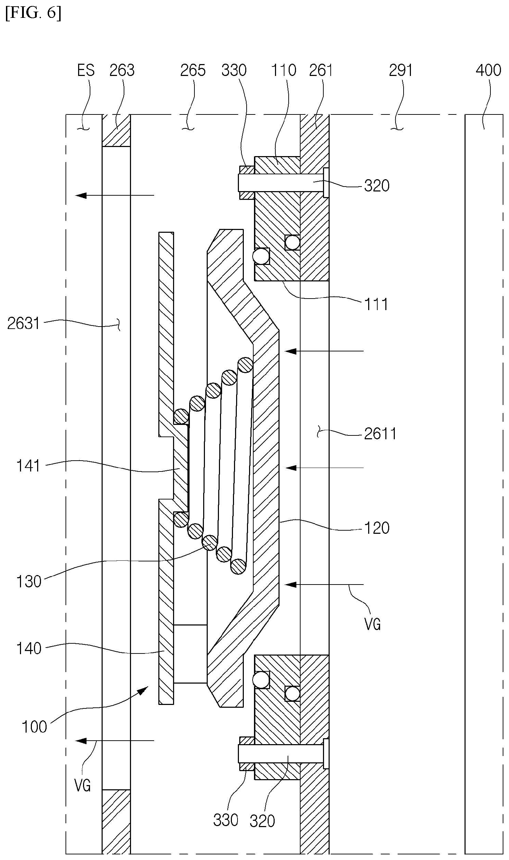

FIG. 1 is a perspective view illustrating a battery pack 10 according to exemplary embodiments of the present disclosure. FIG. 2 is a cross-sectional view illustrating a portion of a battery pack 10 according to exemplary embodiments of the present disclosure. FIG. 3 is a side view illustrating a portion of a battery pack 10 according to exemplary embodiments of the present disclosure. FIG. 4 is a side view illustrating a venting device 100, according to exemplary embodiments of the present disclosure. FIGS. 5 and 6 are cross-sectional views illustrating portions of a battery pack 10 according to exemplary embodiments of the present disclosure, wherein FIG. 5 is a cross-sectional view illustrating the battery pack 10 with the venting device 100 in a closed state, and FIG. 6 is a cross-sectional view illustrating the battery pack 10 with the venting device 100 in an open state.

Referring to FIGS. 1 through 6, the battery pack 10 may include a pack frame 200, a pack lid 310, a battery cell assembly 400, and a venting device 100.

The pack frame 200 may provide an accommodation space 291 in which the battery cell assembly 400 and various electrical components are accommodated. The pack frame 200 may include a bottom frame 210 and side frames 250. The bottom frame 210 and side frames 250 may define the accommodation space 291.

The bottom frame 210 may support the battery cell assembly 400. The bottom frame 210 may have a generally flat plate shape extending in a first horizontal direction (e.g., X direction) and a second horizontal direction (e.g., Y direction).

The side frames 250 may be disposed on the edges of the bottom frame 210. The side frames 250 may be coupled to the perimeter of the bottom frame 210, and may extend continuously along the perimeter of the bottom frame 210 to enclose the battery cell assembly 400. For example, the side frame 250 may include a first segment and a second segment opposed in a first horizontal direction (e.g., X direction), and a third segment and a fourth segment opposed in a second horizontal direction (e.g., Y direction). The first segment of the side frame 250 may be at a front of the battery pack 10, and the second segment of the side frame 250 may be at a rear of the battery pack 10.

The pack frame 200 may include an inner wall 261 and an outer wall 263. The outer wall 263 comprises the exterior of the pack frame 200 and may be exposed to the exterior space ES on the exterior of the pack frame 200. The inner wall 261 and the outer wall 263 may be spaced apart from each other, and a space may be provided between the inner wall 261 and the outer wall 263. A venting passage 265 may be provided between the inner wall 261 and the outer wall 263 of the pack frame 200. The venting passage 265 may guide the flow of gas within the interior of the pack frame 200 and may include a mounting space where the venting device 100 is mounted. The inner wall 261 may be an inner wall of the side frame 250 or may correspond to an inner wall of the bottom frame 210. The outer wall 263 may be an outer wall of the side frame 250 or may correspond to an outer wall of the bottom frame 210. The venting passage 265 may be a venting passage provided in the side frame 250 or may be a venting passage provided in the bottom frame 210.

The pack frame 200 may further include inner frames 281 coupled to the bottom frame 210. The inner frames 281 may be spaced apart from each other in a first horizontal direction (e.g., X direction), and the inner frames 281 may each extend in a second horizontal direction (e.g., Y direction). The inner frames 281 may compartmentalize the interior space 291 of the pack frame 200 into a plurality of spaces. One battery cell assembly 400 may be disposed in each of the plurality of spaces of the pack frame 200 defined by the interior frames 281.

The pack lid 310 may be coupled to the pack frame 200 to cover the battery cell assembly 400 accommodated in the pack frame 200. The pack lid 310 may cover the accommodation space 291 of the pack frame 200 such that the accommodation space 291 of the pack frame 200 is enclosed. The pack lid 310 may be coupled to the upper end of the side frame 250. The pack lid 310 may have a generally flat plate shape extending in a first horizontal direction (e.g., X direction) and a second horizontal direction (e.g., Y direction).

The battery cell assembly 400 may be provided within the accommodation space 291 of the pack frame 200. The battery cell assembly 400 may correspond to a battery module or a cell-to-pack structure. The battery pack 10 may include one or a plurality of battery cell assemblies 400. In exemplary embodiments, the battery pack 10 may include a plurality of battery cell assemblies 400 arranged in a first horizontal direction (e.g., X direction) and/or a second horizontal direction (e.g., Y direction).

The battery cell assembly 400 may include a plurality of battery cells 410. The individual battery cells 410 are the basic unit of a lithium-ion battery, i.e., a secondary battery. Each battery cell 410 may include an electrode assembly, an electrolyte, and a cell case. The electrode assembly, which is embedded in the cell case, may include a positive electrode, a negative electrode, and a separator interposed between the positive electrode and negative electrode. The electrode assembly may be one of a jelly-roll type and a stack-type, depending on the form of assembly. A jelly-roll type electrode assembly may include a winding structure of a positive electrode, a negative electrode, and a separator interposed between them. A stack-type electrode assembly may include a plurality of positive electrodes and a plurality of negative electrodes stacked in sequence, and a plurality of separators interposed therebetween. The positive electrode may include a positive electrode current collector and a positive electrode active material. The negative electrode may include a negative electrode current collector and a negative electrode active material.

The plurality of battery cells 410 may be connected in series and/or parallel. In one example, the plurality of battery cells 410 may be connected in series with each other. In one example, the plurality of battery cells 410 may be connected in parallel to each other. In one example, when defining a set of two or more battery cells 410 connected in parallel to each other as a bank, one bank of two or more battery cells 410 connected in parallel to each other and another bank of two or more battery cells 410 connected in series with each other may be connected in parallel to each other.

The individual battery cells 410 may correspond to pouch-type battery cells, cylindrical battery cells, or prismatic battery cells. The electrode assembly of a pouch-type battery cell is embedded in a pouch cell case that includes an aluminum laminated sheet. In a cylindrical battery cell, the electrode assembly is embedded in a cylindrical metal can. The electrode assembly of a prismatic battery cell is embedded in a prismatic metal can.

The battery cell assembly 400 may be attached to the bottom frame 210 by a thermally conductive adhesive layer 510. In exemplary embodiments, the thermally conductive adhesive layer 510 can be in direct contact with the battery cells 410 and can thermally and physically couple the battery cells 410 to the bottom frame 210. For example, the thermally conductive adhesive layer 510 may include a thermal resin and/or a thermal interface material (TIM).

The battery cell assembly 400 may include a pair of side beams 420 that are fastened to the pack frame 200. The pair of side beams 420 may be spaced apart from each other with the battery cells 410 arranged in a first horizontal direction (e.g., the X direction) in between. One of the pair of side beams 420 may be attached to a battery cell 410 that is the outermost of the battery cells 410, and the other of the pair of side beams 420 may be attached to another battery cell 410 that is the outermost of the battery cells 410. The pair of side beams 420 may each be fastened to a corresponding inner frame 281 of the pack frame 200 via bolts BT.

The venting device 100 may be mounted to the pack frame 200. In FIG. 1, the venting device 100 is illustrated as being mounted on a first segment of the side frame 250, which is at the front of the side frame 250. However, by no means limited thereto, the venting device 100 may be mounted on at least one of the segments of the side frame 250, and may also be mounted on the bottom frame 210.

The venting device 100 may be configured to open or close the internal passage based on pressure in the accommodation space 291 of the pack frame 200. The venting device 100 may be configured to switch between a closed state and an open state based on pressure in the accommodation space 291 of the pack frame 200.

In a closed state of the venting device 100, the venting device 100 may close the passage between the exterior space ES and the accommodation space 291 of the pack frame 200 to block gas flow between the exterior space ES and the accommodation space 291 of the pack frame 200. In an open state of the venting device 100, the venting device 100 may open the passage between the exterior space ES and the accommodation space 291 of the pack frame 200 to allow gas flow between the exterior space ES and the accommodation space 291 of the pack frame 200.

The venting device 100 may be in a closed state when the pressure in the accommodation space 291 of the pack frame 200 is below a preset threshold value, and the venting device 100 may be in an open state when the pressure in the accommodation space 291 of the pack frame 200 exceeds the preset threshold value. When the pressure in the accommodation space 291 of the pack frame 200 exceeds the preset threshold value, the venting device 100 may be in an open state, and the gas in the accommodation space 291 of the pack frame 200 may be released into the exterior space ES to relieve the pressure in the accommodation space 291 of the pack frame 200. When the pressure in the accommodation space 291 of the pack frame 200 is relieved such that the pressure in the accommodation space 291 of the pack frame 200 is below a preset threshold value, the venting device 100 may transition from the open state to the closed state.

The venting device 100 may be installed within a venting passage 265 provided between the inner wall 261 and the outer wall 263 of the pack frame 200. In exemplary embodiments, the venting device 100 may be mounted to the pack frame 200 such that its entirety is accommodated within the venting passage 265 of the pack frame 200. In exemplary embodiments, the venting device 100 may be provided entirely between the inner wall 261 and the outer wall 263 of the pack frame 200. In exemplary embodiments, components of the venting device 100 may be mounted to the pack frame 200 such that they do not penetrate within the accommodation space 291 of the pack frame 200. When the venting device 100 is mounted to the side frame 250, the thickness of the venting device 100 along the thickness direction of the side frame 250 may be less than the thickness of the side frame 250. When the venting device 100 is mounted on the bottom frame 210, the thickness of the venting device 100 along the thickness direction of the bottom frame 210 may be less than the thickness of the bottom frame 210.

The inner wall 261 of the pack frame 200 can include a through-hole 2611 communicating with the accommodation space 291 of the pack frame 200. The outer wall 263 of the pack frame 200 can include a through-hole 2631 communicating with the exterior space ES. A venting passage 265 of the pack frame 200 may communicate with the exterior space ES through the through-hole 2631 of the outer wall 263. The venting device 100 may be exposed to the exterior of the battery pack 10 through the through-holes 2631 in the outer wall 263 of the pack frame 200.

The venting device 100 may include a base plate 110, an open/close cover 120, a spring 130, and a cap body 140.

The base plate 110 may be mounted to the inner wall 261 of the pack frame 200. The base plate 110 may be pressed against an outer surface of the inner wall 261 of the pack frame 200 that faces the outer wall 263. The base plate 110 may include a passage 111 that communicates with a through-hole 2611 in the inner wall 261 of the pack frame 200. The passage 111 of the base plate 110 can communicate with the through-hole 2611 of the inner wall 261 of the pack frame 200 through the through-hole 2611 to the accommodation space 291 of the pack frame 200. A sealing ring may be disposed between the inner walls 261 of the pack frame 200 to prevent gas leakage.

The open/close cover 120 can open and close the passage 111 of the base plate 110. The open/close cover 120 can switch between a closed position that closes the passage 111 of the base plate 110 and an open position that opens the passage 111 of the base plate 110, depending on pressure in the accommodation space 291 of the pack frame 200. In the closed state of the venting device 100, the open/close cover 120 may be in the closed position. In an open state of the venting device 100, the open/close cover 120 may be in an open position. The open/close cover 120 may be configured to move linearly between the open and closed positions. The closed position of the open/close cover 120 may be closer to the inner wall 261 than the open position of the open/close cover 120.

When the open/close cover 120 is in the closed position, the open/close cover 120 may close the passage 111 of the base plate 110 to the exterior space ES such that the passage 111 of the base plate 110 does not communicate with the exterior space ES. When the open/close cover 120 is in the closed position, gas flow may be blocked between the accommodation space 291 of the pack frame 200 and the exterior space ES.

When the open/close cover 120 is in the open position, the open/close cover 120 can open the passage 111 of the base plate 110 to the exterior space ES such that the passage 111 of the base plate 110 communicates with the exterior space ES. When the open/close cover 120 is in the open position, gas can flow from the accommodation space 291 of the pack frame 200 to the exterior space ES through the passage 111 of the base plate 110.

The cap body 140 may be fixed to the base plate 110. The cap body 140 may contact one end of the spring 130 and may support one end of the spring 130. The cap body 140 may include a support part supporting one end of the spring 130, and a connecting part extending between the support part and the base plate 110. The support part of the cap body 140 may include a protruding part 141 that supports the spring 130. The connecting part of the cap body 140 may be fastened to the base plate 110 via bolts 150. By the connecting part of the cap body 140 being fastened to the base plate 110 via the bolts 150, the cap body 140 may be fixed to the base plate 110.

The spring 130 may provide resilience to the open/close cover 120 in a direction from an open position of the open/close cover 120 toward a closed position. For example, the spring 130 may be configured to compress the open/close cover 120 in a direction from the outer wall 263 toward the inner wall 261. The spring 130 may be provided between the cap body 140 and the open/close cover 120. The cap body 140 may support one end of the spring 130, and the open/close cover 120 may support the other end of the spring 130. In exemplary embodiments, the spring 130 may be a coil spring. The spring 130 may be mounted to the cap body 140 such that a portion thereof is wound around a protruding part 141 of the cap body 140.

As shown in FIG. 5, when the pressure in the accommodation space 291 of the pack frame 200 is below a predetermined threshold, the open/close cover 120 may be pressed against the spring 130 to lock it in the closed position. When the open/close cover 120 is in the closed position, components of the venting device 100, such as the open/close cover 120 and the spring 130, do not penetrate the accommodation space 291 of the pack frame 200.

As shown in FIG. 6, when the pressure in the accommodation space 291 of the pack frame 200 exceeds a predetermined threshold value, the open/close cover 120 can be progressively moved from the closed position toward the open position or from the inner wall 261 toward the outer wall 263. When the open/close cover 120 is positioned in the open position, the venting gas (VG) can be discharged to the exterior space (ES) through the passage 111 of the base plate 110, the gap between the open/close cover 120 and the base plate 110, the passage between the inner wall 261 and the outer wall 263, and the through-hole 2631 in the outer wall 263.

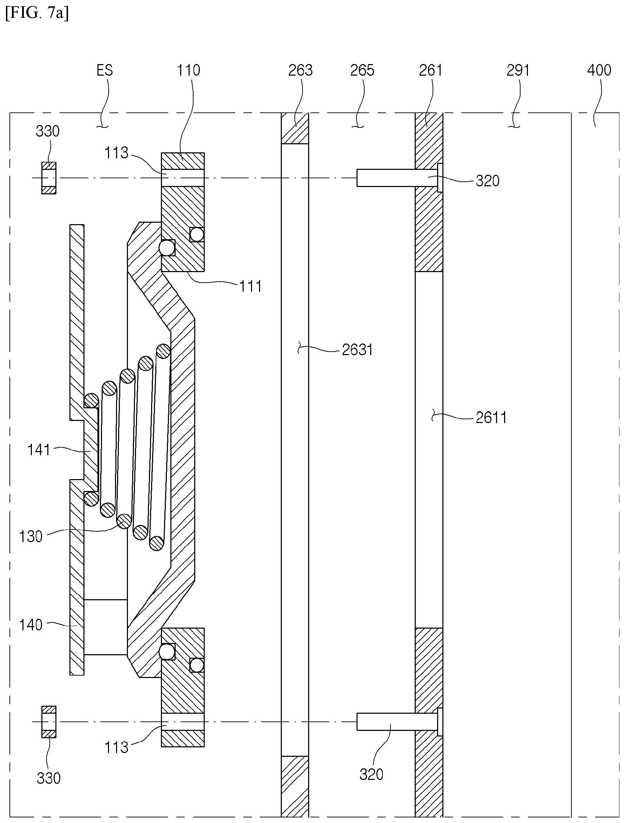

The pack frame 200 may include a fastening bolt 320 for fastening the venting device 100. The fastening bolt 320 may be coupled to an inner wall 261 of the pack frame 200, and may include a protruding part protruding from the inner wall 261 of the pack frame 200 in a direction from the inner wall 261 of the pack frame 200 toward the outer wall 263. The fastening bolt 320 may be a clinching bolt coupled to the inner wall 261 of the pack frame 200 in a self-clinching manner. The protruding part of the fastening bolts 320 may be inserted into the fastening holes (113 in FIG. 7a) of the base plate 110. The battery pack 10 may further include a nut 330 that fits onto the protruding part of the fastening bolt 320. The inner circumferential surface of the nut 330 may be provided with threads that engage threads provided on the outer circumferential surface of the protruding part of the fastening bolt 320. The base plate 110 of the venting device 100 may be fixed to the inner wall 261 of the pack frame 200 by the nut 330 engaging the protruding part of the fastening bolt 320.

In the case of the battery pack according to the comparative example, a portion of the valve structure mounted on the pack frame is configured to penetrate the accommodation space of the pack frame. In this case, the space occupied by the valve structure in the accommodation space of the pack frame is such that battery cells cannot be disposed therein, resulting in poor space utilization of the battery pack. Furthermore, to minimize the space occupied by the valve structure in the accommodation space of the pack frame, there is a limitation on the installation location and number of the valve structure.

According to exemplary embodiments of the present disclosure, the venting device 100 is mounted to the pack frame 200 such that it does not occupy the accommodation space 291 of the pack frame 200 accommodating the battery cells 410, which can improve space utilization and energy density of the battery pack 10.

According to exemplary embodiments of the present disclosure, the venting device 100 is mounted to the pack frame 200 so as not to occupy the accommodation space 291 of the pack frame 200, so that the venting device 100 can be mounted on different portions of the pack frame 200 without being limited to the installation location and number of valve structures.

### (Second embodiment)

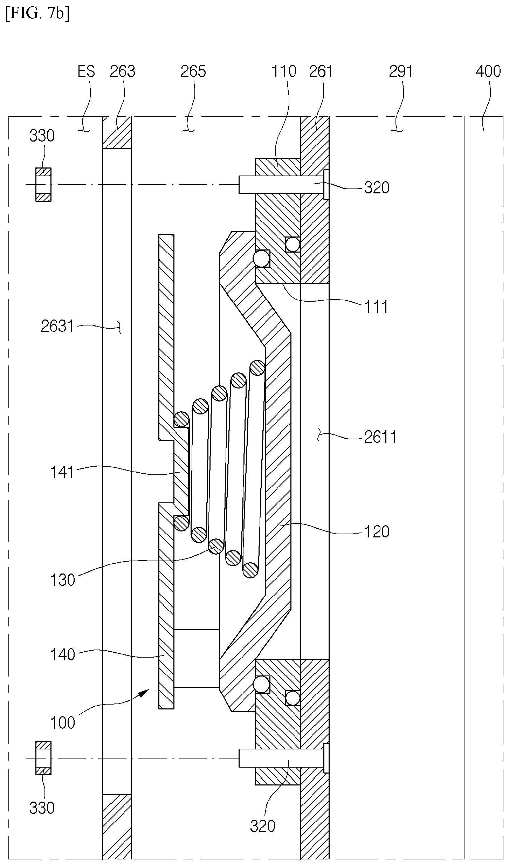

FIGS. 7a and 7b are cross-sectional views illustrating a method of manufacturing a battery pack 10 according to exemplary embodiments of the present disclosure.

Referring to FIG. 7a, a fastening bolt 320 is coupled to the inner wall 261 of the pack frame 200. The fastening bolt 320 may be coupled to the inner wall 261 of the pack frame 200 in a self-clinching manner. The fastening bolt 320 may have a protruding part protruding from the inner wall 261 in a direction away from the inner wall 261 toward the outer wall 263.

Referring to FIG. 7b and FIG. 5, the venting device 100 is assembled to the pack frame 200. Assembling the venting device 100 to the pack frame 200 includes introducing the venting device 100 through the through-hole 2631 of the outer wall 263 into the venting passage 265 of the pack frame 200, positioning the venting device 100 such that a fastening hole 113 in the base plate 110 of the venting device 100 is inserted into a protruding part of the fastening bolt 320; and fixing the base plate 110 of the venting device 100 to the inner wall 261 of the pack frame 200 by threading a nut 330 onto the protruding part of the fastening bolt 320.

In accordance with exemplary embodiments of the present disclosure, the assembly operation of the venting device 100, which involves assembling the venting device 100 to the pack frame 200, may be performed on the outside of the pack frame 200. In this case, it is not necessary to reserve space in the accommodation space 291 of the pack frame 200 for the assembly of the venting device 100, and the assembly operation of the venting device 100 can be performed with the pack lid 310 coupled to the pack frame 200. Because the assembly of the venting device 100 can be performed with the pack lid 310 coupled to the pack frame 200, the assembly of the venting device 100 can be performed during the end-of-line testing phase.

### (Third embodiment)

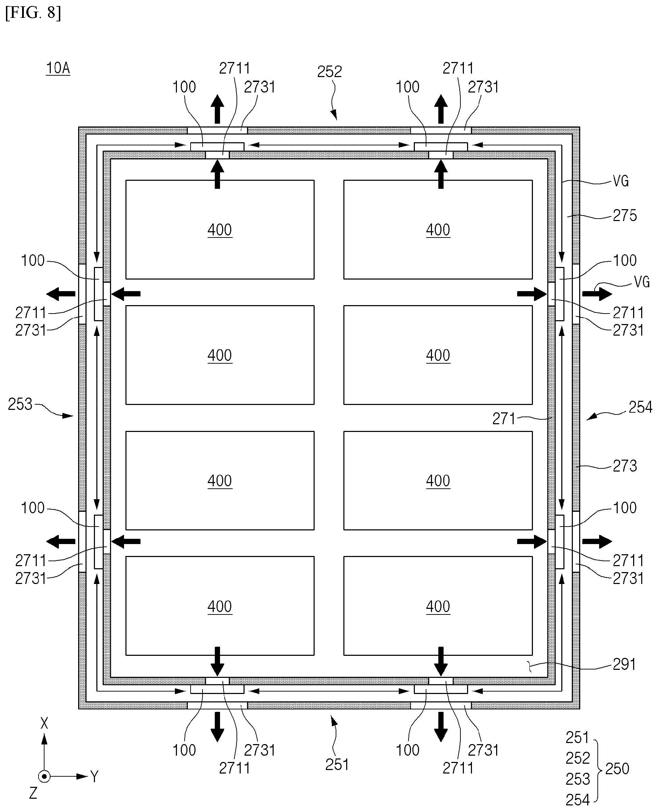

FIG. 8 is a layout diagram schematically illustrating a battery pack 10A according to exemplary embodiments of the present disclosure. In the following, duplicates of the foregoing description are omitted or shortened.

Referring to FIG. 8, the battery pack 10A may include a plurality of venting devices 100 mounted to a side frame 250. The side frame 250 may include an inner wall 271 and an outer wall 273 spaced apart in a horizontal direction (e.g., an X direction or a Y direction). A venting passage 275 may be provided between the inner wall 271 and the outer wall 273. The individual venting devices 100 may be mounted to the inner wall 271 of the side frame 250 and may be accommodated within the venting passage 275 of the side frame 250. When the internal pressure in the accommodation space 291 of the pack frame 200 of FIG. 1 exceeds a threshold value, the plurality of venting devices 100 may be in an open state, and the venting gas VG in the accommodation space 291 of the pack frame 200 may be discharged to an exterior space through through-holes 2711 in the inner wall 271, the internal passages of the plurality of venting devices 100, and the through-holes 2731 in the outer wall 273.

When viewed in plan, the side frame 250 may have a square ring shape, and the venting passages 275 provided in the interior of the side frame 250 may extend continuously along the side frame 250 to have a square ring shape. The side frame 250 may include a first segment 251 and a second segment 252 spaced apart in a first horizontal direction (e.g., X direction) with the accommodation space 291 in between, and a third segment 253 and a fourth segment 254 spaced apart in a second horizontal direction (e.g., Y direction) with the accommodation space 291 in between. The first segment 251 of the side frame 250 may be at the front of the battery pack 10A, and the second segment 252 of the side frame 250 may be at the rear of the battery pack 10A. The first segment 251 and the second segment 252 may each extend in a second horizontal direction (e.g., Y direction). The third segment 253 and the fourth segment 254 may each extend in a first horizontal direction (e.g., X direction) between the first segment 251 and the second segment 252.

At least two of the first to fourth segments 251, 252, 253, 254 of the side frame 250 may be equipped with at least one venting device 100. In exemplary embodiments, each of the first to fourth segments 251, 252, 253, 254 of the side frame 250 may be equipped with at least one venting device 100. The venting devices 100 mounted on the first to fourth segments 251, 252, 253, 254 of the side frame 250 may be provided within the venting passage 275 of the side frame 250. When the internal pressure in the accommodation space 291 of the pack frame 200 exceeds a threshold value, venting gas (VG) may be introduced into the venting passages 275 of the side frame 250, flow inside the side frame 250 along the venting passages 275 of the side frame 250, and be discharged to the outside through the through-holes 2731 of the outer wall 273. In this case, hot gases generated by the battery cell assembly 400 can be quickly discharged to the front, rear, and sides of the battery pack 10A through the venting devices 100 and the venting passages 275 of the side frame 250, thereby improving the safety of the battery pack 10A.

### (Fourth embodiment)

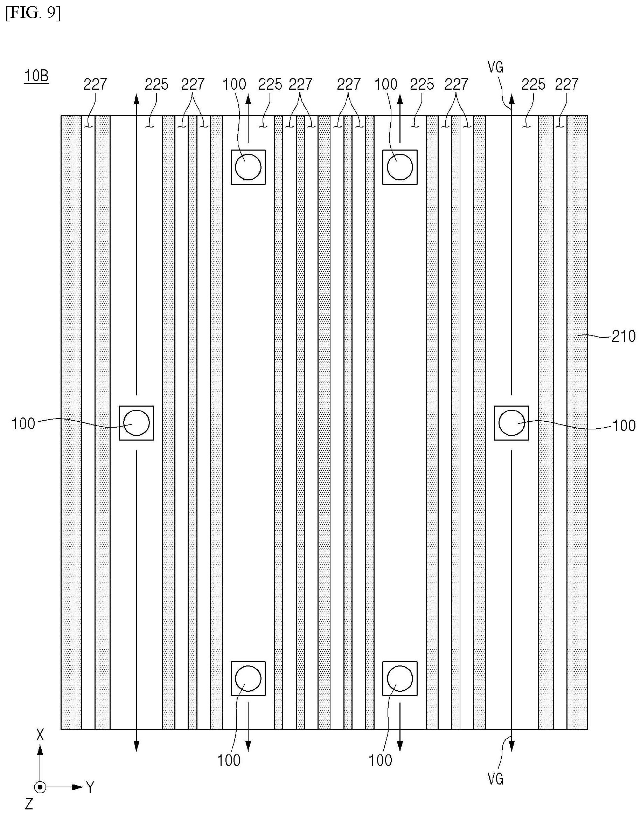

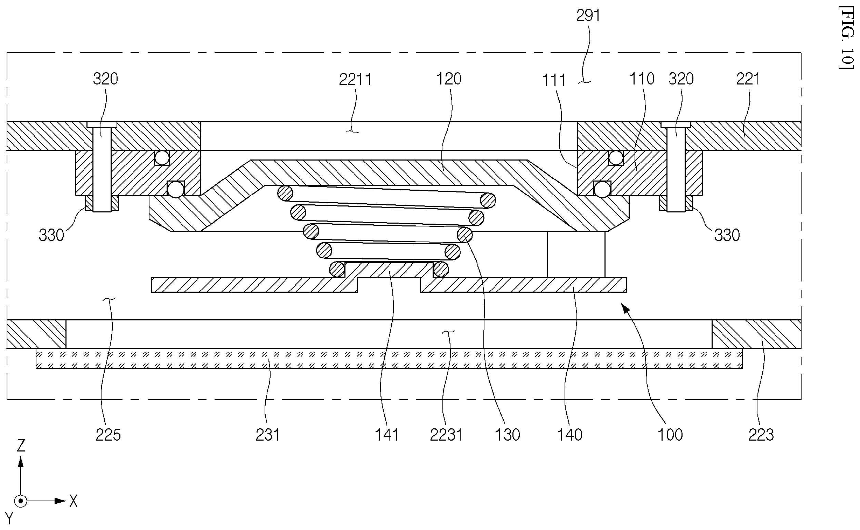

FIG. 9 is a layout diagram schematically illustrating a bottom frame 210 of a battery pack 10B according to exemplary embodiments of the present disclosure. FIG. 10 is a cross-sectional view illustrating a venting device 100 mounted to the bottom frame 210. In the following, duplication of the foregoing description is omitted or shortened.

Referring to FIGS. 9 and 10, in the pack frame 200 of the battery pack 10B, a bottom frame 210 may include a venting passage 225 and a cooling passage 227. The bottom frame 210 may include an inner wall 221 and an outer wall 223 spaced apart in a vertical direction (e.g., Z direction), and the venting passages 225 and the cooling passages 227 may be provided between the inner wall 221 and the outer wall 223, respectively. The venting passage 225 and the cooling passage 227 may each extend in a first horizontal direction (e.g., X direction). The venting passage 225 and the cooling passage 227 may be spaced apart from each other in a second horizontal direction (e.g., Y direction). An end of the venting passage 225 may be exposed to the exterior space of the battery pack 10B. The venting passage 225 may communicate with the accommodation space 291 of the pack frame 200 when the venting device 100 is in an open state. The cooling passage 227 does not communicate with the accommodation space 291 of the pack frame 200. The bottom frame 210 may include a plurality of venting passages 225 spaced apart from each other in a second horizontal direction (e.g., Y direction) and a plurality of cooling passages 227 spaced apart from each other in a second horizontal direction (e.g., Y direction).

The battery pack 10B may include a plurality of venting devices 100 mounted to the bottom frame 210. Each venting device 100 is mounted to an inner wall 221 of the bottom frame 210 and may be accommodated within a venting passage 225 of the bottom frame 210. When the internal pressure in the accommodation space 291 of the pack frame 200 exceeds a threshold value, the plurality of venting devices 100 may be in an open state, and the venting gas VG in the accommodation space 291 of the pack frame 200 may be discharged through the through-holes 2211 of the inner wall 221, the internal passages of the plurality of venting devices 100, and the venting passages 225 of the bottom frame 210 to an exterior space.

The cooling passage 227 may guide an externally supplied cooling fluid. The cooling fluid may include coolant and/or refrigerant. The externally provided cooling fluid may enter the cooling passage 227 through an inlet pipe mounted to the bottom frame 210, flow along the cooling passage 227, and exit to the outside through an outlet pipe mounted to the bottom frame 210. While the cooling fluid flows along the cooling passage 227, cooling of the battery cell assemblies 400 may be performed.

In exemplary embodiments, the bottom frame 210 may include a cover plate 231 that covers and closes the through-holes 2231 of the outer wall 223 overlapping with the venting device 100 in one direction (e.g., Z direction). The cover plate 231 may close the through-holes 2231 of the outer wall 223 to prevent gases from the venting passage 225 from escaping through the through-holes 2231 of the outer wall 223 to an exterior space.

The assembly operation of assembling the venting device 100 to the bottom frame 210 may be performed without coupling the cover plate 231 to the outer wall 223, and the through-hole 2231 of the outer wall 223 may be closed by coupling the cover plate 231 to the outer wall 223 after the assembly operation of the venting device 100 is completed. More specifically, the manufacturing of the battery pack 10B can be accomplished by coupling the fastening bolts 320 to the inner wall 221 of the bottom frame 210 in a self-clinching manner, and introducing the venting device 100 through the through-hole 2231 of the outer wall 223 into the venting passage 225 of the bottom frame 210, positioning the venting device 100 so that a fastening hole in the base plate 110 of the venting device 100 is inserted into a protruding part of the fastening bolt 320, and fixing the base plate 110 of the venting device 100 to the inner wall 221 of the pack frame 200 by threading a nut 330 onto the protruding part of the fastening bolt 320, and coupling the cover plate 231 to the outer wall 223.

According to exemplary embodiments of the present disclosure, hot gases generated by the battery cell assembly 400 can be quickly discharged to the front, rear, and sides of the battery pack 10B via the venting devices 100 mounted on the bottom frame 210 and side frames 250 of the pack frame 200, thereby improving the safety of the battery pack 10B.

### (Fifth embodiment)

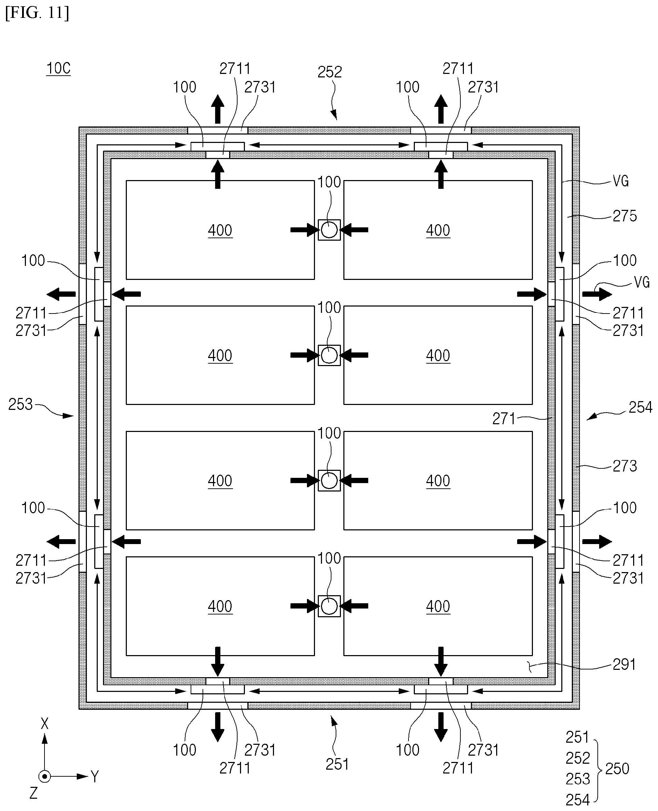

FIG. 11 is a layout diagram schematically illustrating a battery pack 10C according to exemplary embodiments of the present disclosure. In the following, duplicates of the foregoing description will be omitted or shortened.

Referring to FIG. 11, in the battery pack 10C, a plurality of battery cell assemblies 400 may be arranged in a first horizontal direction (e.g., X direction) and a second horizontal direction (e.g., Y direction) on the bottom frame 210, and a plurality of venting devices 100 may be mounted on bottom frame 210 or side frames 250, respectively. In the bottom frame 210, the venting devices 100 may be disposed in the center part of the bottom frame 210. In exemplary embodiments, in the bottom frame 210, the venting devices 100 may be disposed between battery cell assemblies 400 that are each neighboring in a second horizontal direction (e.g., Y direction).

In exemplary embodiments, hot gases generated by the battery cell assembly 400 can be quickly discharged to the front, rear, and sides of the battery pack 10B via the venting devices 100 mounted on the bottom frame 210 and side frame 250, thereby improving the safety of the battery pack 10B.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

## Claims

1. A battery pack comprising:
a battery cell assembly comprising a battery cell;
a pack frame comprising a bottom frame supporting the battery cell assembly and a side frame coupled to the bottom frame, the bottom frame and the side frame defining an accommodation space for accommodating the battery cell assembly, the bottom frame comprising a first venting passage communicating with an exterior space; and
a first venting device disposed within the first venting passage of the bottom frame, and configured to open and close an inner passage in response to pressure in the accommodation space of the pack frame.

2. The battery pack of claim 1, wherein
the pack frame further comprises a cooling passage configured for cooling fluid to flow through, wherein
the first venting passage and the cooling passage extend in a first direction, wherein
the first venting passage and the cooling passage are spaced apart from each other in a second direction perpendicular to the first direction.

3. The battery pack of claim 1, wherein
the first venting device is accommodated entirely within the first venting passage of the bottom frame.

4. The battery pack of claim 1, wherein
the bottom frame comprises a first inner wall and a first outer wall defining the first venting passage, wherein
the first venting device comprises:
a first base plate mounted on the first inner wall of the bottom frame, and having a passage communicating a through-hole in the first inner wall of the bottom frame;
a first open/close cover configured to open and close the passage of the first base plate;
a first spring providing resilience to the first open/close cover to cause the first open/close cover to close the passage of the first base plate; and
a first cap body fixed to the first base plate, and supporting the first spring.

5. The battery pack of claim 4, wherein
the first open/close cover is configured to move between a closed position closing the passage of the first base plate and an open position opening the passage of the first base plate, wherein
the closed position of the first open/close cover is closer to the first inner wall than the open position of the first open/close cover,
the first spring is configured to press the first open/close cover in a direction from the first outer wall toward the first inner wall.

6. The battery pack of claim 5, wherein
when the first open/close cover is in the closed position, the first spring does not penetrate the accommodation space of the pack frame.

7. The battery pack of claim 4, wherein
one end of the first spring contacts the first cap body, and the other end of the first spring contacts the first open/close cover.

8. The battery pack of claim 4, wherein
the first cap body comprises a protruding part supporting the first spring.

9. The battery pack of claim 4, further comprising:
a first fastening bolt coupled to the first inner wall of the bottom frame, and comprising a protruding part protruding from the first inner wall of the bottom frame in a direction from the first inner wall of the bottom frame toward the first outer wall of the bottom frame; and
a first nut fitting into the protruding part of the first fastening bolt, wherein
the first base plate comprises a fastening hole into which a protruding part of the first fastening bolt is inserted, wherein
the first base plate is fixed to the first inner wall of the bottom frame by the first nut fitting into the protruding part of the first fastening bolt.

10. The battery pack of claim 4, wherein
the bottom frame further comprises a cover plate coupled to the first outer wall to cover a through-hole in the first outer wall that is superimposed on the first venting device in one direction.

11. The battery pack of claim 1, further comprising:
a plurality of second venting devices disposed within a second venting passage provided between the second inner wall and the second outer wall of the side frame, wherein
each of the plurality of second venting devices is configured to open and close an internal passage in response to pressure in the accommodation space of the pack frame.

12. The battery pack of claim 11, wherein
the side frame comprises a first segment and a second segment spaced apart in a third direction with the accommodation space in between, and a third segment and a fourth segment perpendicular to the third direction with the accommodation space in between, wherein
the plurality of second venting devices is mounted on at least two among the first segment, the second segment, the third segment, and the fourth segment of the side frame.

13. The battery pack of claim 11, wherein
each of the plurality of second venting devices is accommodated entirely within the second venting passage of the side frame.

14. The battery pack of claim 11, wherein
each of the plurality of second venting devices comprises:
a second base plate mounted on the second inner wall of the side frame, and having a passage communicating a through-hole in the second inner wall of the side frame;
a second open/close cover configured to open and close the passage of the second base plate;
a second spring providing resilience to the second open/close cover to cause the second open/close cover to close the passage in the second base plate; and
a second cap body fixed to the second base plate, and supporting the second spring.

15. The battery pack of claim 11, wherein
each of the plurality of second venting devices is exposed to the outside through a through-hole in the second outer wall.
